# EUROPÄISCHE PATENTSCHRIFT

(11) **EP 1 952 038 B1**
(45) Veröffentlichungstag und Bekanntmachung des Hinweises auf die Patenterteilung: **05.01.2011**
(21) Anmeldenummer: 06818542.0
(22) Anmeldetag: 15.11.2006
(51) Int. Cl.: F16D 13/64, F16D 13/72

(54) **KUPPLUNG FÜR EIN KRAFTFAHRZEUG**
CLUTCH FOR A MOTOR VEHICLE
EMBRAYAGE DE VEHICULE AUTOMOBILE

(30) Priorität: 16.11.2005 DE 102005054450
(43) Veröffentlichungstag der Anmeldung: 06.08.2008
(73) Patentinhaber: GM Global Technology Operations, Inc., Detroit, MI 48265-3000 (US)
(72) Erfinder: HAMANN, Horst, 65428 Rüsselsheim (DE)
(74) Vertreter: Strauss, Peter
(86) Internationale Anmeldenummer: PCT/EP2006/010936
(87) Internationale Veröffentlichungsnummer: WO 2007/057163

(56) Entgegenhaltungen:
- BE-A- 569 744
- DE-A1- 4 108 385
- FR-A1- 2 819 570

## Beschreibung

Die vorliegende Erfindung betrifft eine Kupplung für den Antriebsstrang eines Kraftfahrzeugs sowie ein automatisiertes Schaltgetriebe, in welchem eine solche Kupplung verwendet wird.

Die Anmelderin hat in den vergangenen Jahren unter der Bezeichnung "Easytronic" ein automatisiertes Schaltgetriebe entwickelt, in welchem ein Steuergerät an Stelle des Fahrers die in einem Schaltgetriebe für einen Gangwechsel erforderlichen Schaltbewegungen steuert. Das Steuergerät unterstützt eine vollautomatische Gangwahl in Abhängigkeit von der momentanen Fahrsituation sowie eine Gangwahl nach Vorgabe des Fahrers, der kein Kupplungspedal und keinen Schalthebel mehr betätigen muss, sondern lediglich Tasten betätigt, um dem Steuergerät seinen Wunsch nach einem Gangwechsel zu signalisieren. Das Steuergerät betätigt darauf hin einen Kupplungsaktor, um eine Kupplung des Schaltgetriebes zu öffnen, einen Getriebeaktor, um einen ausgewählten Gang einzulegen, und anschließend wiederum den Kupplungsaktor, um die Kupplung wieder zu schließen.

Das automatisierte Schaltgetriebe hat Vorteile sowohl gegenüber einem herkömmlichen manuellen Schaltgetriebe, da es dem Fahrer Steuerungsaufgaben wie etwa ein dosiertes Anlegen der Kupplung beim Anfahren, Aus- und Einkuppeln während der Gangwechsel und Auskuppeln beim Anhalten abnimmt, und gegenüber einem herkömmlichen Automatikgetriebe, da es einen geringeren spezifischen Kraftstoffverbrauch aufweist und ein flexibles Schaltverhalten nach Wunsch des Fahrers ermöglicht. Eine Anfahrdrehzahl, die höher ist als die von einem geübten Fahrer bei einem Handschaltgetriebe üblicherweise verwendete, ermöglicht ein gleichmäßiges, ruckfreies Anfahren ähnlich wie bei einem Automatikgetriebe.

Aus BE 569 744 ist eine Kupplung bekannt wobei die Verschleißschichten auf beiden Seiten der Kupplungsscheibe in mehrere Stücke gegliedert sind. Auf jeder Seite der Kupplungsscheibe wechseln sich in Umfangsrichtung Stücke von unterschiedlicher Dicke ab. Indem sich jeweils Stücke von unterschiedlicher Dicke auf beiden Seiten der Kupplungsscheibe gegenüberliegen, wird beim Schließen der Kupplung eine elastische Verformung der Kupplungsscheibe erzwungen.

Aufgabe der Erfindung ist, eine Kupplung für ein automatisiertes Schaltgetriebe mit vergrößerter Lebensdauer anzugeben.

Die Aufgabe wird erfindungsgemäß gelöst durch eine Kupplung nach Anspruch 1.

Bei einer herkömmlichen Kupplung für ein Handschaltgetriebe trägt die Kupplungsscheibe auf beiden Seiten Verschleißschichten von gleicher Stärke, die sich gleichmäßig abnutzen, entsprechend der Tatsache, dass die beim Schließen der Kupplung entstehende Reibungswärme an beiden Verschleißschichten in im wesentlichen gleicher Menge anfällt. Da von den zwei Platten, die die Kupplungsscheibe einklemmen, die bewegliche im allgemeinen die kleinere Masse und damit die kleinere Wärmekapazität hat, ist auf deren Seite mit einer stärkeren Erwärmung zu rechnen. Da der Verschleiß der Verschleißschichten mehr als linear mit der Temperatur zunimmt, ist bei der Kupplungsscheibe, die der Platte mit der kleineren Wärmekapazität zugewandt ist, mit einem erhöhten Abrieb zu rechnen. Dies wird erfindungsgemäß kompensiert, indem man die Dicken der Verschleißschichten an den zwei Seiten der Kupplungsscheibe unterschiedlich wählt. So kann man erreichen, dass beide ungefähr gleichzeitig eine Mindestdicke erreichen, bei der sie ausgetauscht werden müssen. Die Lebensdauer der Verschleißschichten ist somit erhöht, ohne dass hierfür ihre Gesamtdicke - und damit das Trägheitsmoment der Kupplung - vergrößert werden müsste.

Der optimale Faktor, um den die der zweiten Platte zugewandte Verschleißschicht dicker sein sollte als die der ersten Platte zugewandte hängt offensichtlich in gewissen Grenzen von den Einsatzbedingungen, insbesondere der Anfahrdrehzahl, und von den genauen Werten von Wärmekapazität und Wärmeleitvermögen der zwei Platten ab und kann experimentell optimiert werden. Generell erweist sich als zweckmäßig, die Verschleißschicht an der der zweiten Platte zugewandten Seite der Kupplungsscheibe um wenigstens einen Faktor 1,2 und höchstens einen Faktor 1,7 dicker als an der der ersten Platte zugewandten Seite zu wählen.

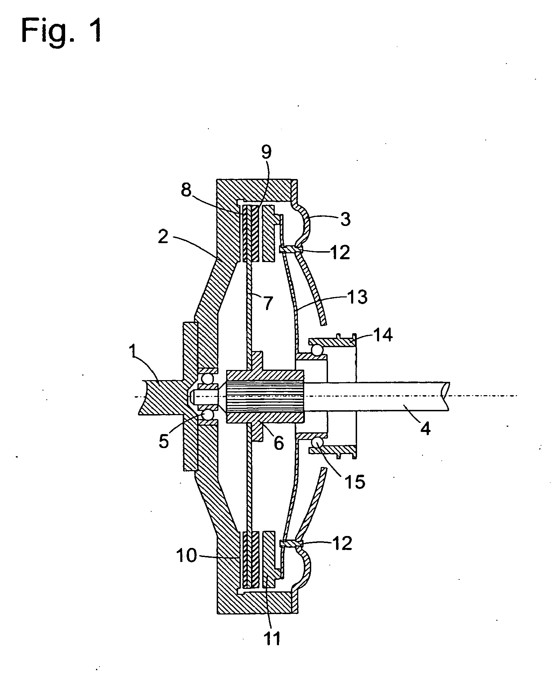

Weitere Merkmale und Vorteile der Erfindung ergeben sich aus der nachfolgenden Beschreibung eines Ausführungsbeispiels unter Bezugnahme auf die beigefügte Figur.

Die einzige Fig. zeigt einen schematischen Schnitt durch eine erfindungsgemäße Einscheibenkupplung. Eine motorseitige erste Welle 1 trägt drehfest und in axialer Richtung fest ein Schwungrad 2. An der Peripherie des Schwungrades 2 ist ein Kupplungsdeckel 3 befestigt. Eine getriebeseitige zweite Welle 4 greift in das von Schwungrad 2 und Kupplungsdeckel 3 gebildete Gehäuse ein und ist koaxial zur ersten Welle 1 durch ein Wälzlager 5 gehalten, das in einer Bohrung des Schwungrades 2 aufgenommen ist und seinerseits einen Abschlusszapfen der Welle 4 aufnimmt.

Eine formschlüssig auf die zweite Welle 4 aufgesteckte oder aufgepresste Hülse 6 trägt eine elastische Kupplungsscheibe 7. In einem äußeren Randbereich der Kupplungsscheibe 7 sind Beläge 8 bzw. 9 aufgeklebt oder genietet. Der einem Klemmbacken 10 des Schwungrades 2 zugewandte Belag 8 hat z. B. eine Stärke von ca. 1 mm; der gegenüberliegende, einer ringförmigen Kupplungsdruckplatte 11 zugewandte Belag 9 ist ca. 1,5 mm stark.

Im geschlossenen Zustand der Kupplung ist die Kupplungsdruckplatte 11 durch eine an Stiften 12 schwenkbare Tellerfeder 13 gegen das Schwungrad 2 gedrückt, so dass die Kupplungsscheibe 7 zwischen Schwungrad 2 und Druckplatte 11 fest eingeklemmt ist und die Drehung der ersten Welle 1 auf die zweite Welle 4 überträgt. In der gezeigten Stellung ist die Tellerfeder 13 durch einen Ausrücker 14 verformt, der eine von einer nicht dargestellten Ausrückgabel ausgeübte, axial nach links in der Fig. gerichtete Kraft über ein Axialwälzlager 15 auf die Tellerfeder 13 überträgt und die Kupplung so geöffnet hält.

Anhand der Fig. ist leicht nachvollziehbar, dass, wenn die von einem elektronischen Steuergerät betätigte Ausrückgabel nach rechts zurückweicht, die Tellerfeder 13 die Druckplatte 11 gegen die Kupplungsscheibe 7 drückt, so dass diese gegen das Schwungrad 2 zurückweicht und schließlich zwischen Druckplatte 11 und Schwungrad 2 geklemmt wird. Die beim Schließen der Kupplung entstehende Reibungswärme ist auf beiden Seiten der Kupplungsscheibe 7 im wesentlichen dieselbe, aufgrund des im Vergleich zum Schwungrad 2 geringen Gewichts und der dementsprechend kleinen Wärmekapazität der Druckplatte 11 kann sich die Reibungswärme in der Druckplatte 11 nur begrenzt verteilen, so dass sich der Belag 9 deutlich stärker erwärmt als der Belag 8.

Das Verhältnis der Dicken der Beläge 8, 9 ist so gewählt, dass sich unter Berücksichtigung des temperaturbedingt unterschiedlichen Verschleißes der Beläge 8, 9 eine gleiche Lebensdauer für beide Beläge 8, 9 ergibt. Ein Dickenverhältnis zwischen 1,2 und 1,7 ist zweckmäßig, ein Wert von ca. 1,5 ist bevorzugt.

Die Erfindung ist auch auf eine Zweischeibenkupplung anwendbar. Eine solche Kupplung weist zwischen Schwungrad und Druckplatte zwei auf der zweiten Welle drehfeste Kupplungsscheiben und zwischen diesen eine axial bewegliche und mit dem vom Schwungrad und Kupplungsdeckel gebildeten Gehäuse drehfest verbundene Platte auf. Auch hier können sich die Bauteile, zwischen denen jeweils eine der Kupplungsscheiben geklemmt wird, in ihrer Wärmekapazität erheblich unterscheiden, was zu unterschiedlicher Erwärmung und dementsprechend unterschiedlichem Verschleiß der Beläge auf entgegengesetzten Seiten der Kupplungsscheiben führt, so dass der Belag an der dem Bauteil mit der kleineren Wärmekapazität zugewandten Seite der Kupplungsscheibe dicker gewählt sein sollte als der gegenüberliegenden.

### Bezugszeichenliste

- 1.: 1. Welle
- 2.: Schwungrad
- 3.: Kupplungsdeckel
- 4.: 2. Welle
- 5.: Wälzlager
- 6.: Hülse
- 7.: Kupplungsscheibe
- 8.: Belag
- 9.: Belag
- 10.: Klemmbacken
- 11.: Kupplungsdruckplatte
- 12.: Stift
- 13.: Tellerfeder
- 14.: Ausrücker
- 15.: Axialwälzlager

## Patentansprüche

1. Kupplung für ein Kraftfahrzeug mit einer ersten (1) und einer zweiten Welle (4), einer ersten (2) und einer zweiten (11) Platte, die mit der ersten Welle (1) drehfest verbunden sind, von denen die erste Platte (8) eine höhere Wärmekapazität als die zweite Platte (11) hat und von denen wenigstens eine Platte (11) axial verschiebbar ist, um eine mit der zweiten Welle (4) drehfest verbundene Kupplungsscheibe (7), die beiderseits mit einer Verschleißschicht (8, 9) versehen ist, zwischen den zwei Platten (4, 11) zu klemmen, **dadurch gekennzeichnet, dass** die Verschleißschicht (9) an der der zweiten Platte (11) zugewandten Seite der Kupplungsscheibe (7) dicker als die Verschleißschicht (8) an der der ersten Platte (2) zugewandten Seite gewählt ist, so dass beim Verschleiß die beide Verschleißschichten (8, 9) ungefähr gleich zeitig eine mindestdicke erreichen, wodurch die Lebensdauer der Kupplung vergrößert ist.

2. Kupplung nach Anspruch 1, **dadurch gekennzeichnet, dass** die erste Platte (8) axial unbeweglich ist.

3. Kupplung nach Anspruch 1 oder 2, **dadurch gekennzeichnet, dass** die Verschleißschicht (8) an der der zweiten Platte (11) zugewandten Seite um wenigstens einen Faktor 1,2 dicker als an der der ersten Platte (2) zugewandten Seite ist.

4. Kupplung nach Anspruch 1 oder 2, **dadurch gekennzeichnet, dass** die Verschleißschicht (8) an der der zweiten Platte (11) zugewandten Seite um höchstens einen Faktor 1,7 dicker als an der der ersten Platte (2) zugewandten Seite ist.

5. Automatisiertes Schaltgetriebe für ein Kraftfahrzeug, **dadurch gekennzeichnet, dass** eine Kupplung nach einem der vorhergehenden Ansprüche an einer Eingangsseite des Schaltgetriebes vorgesehen ist.

## Claims

1. A clutch for a motor vehicle, comprising a first (1) and second shaft (4), a first (2) and second (11) plate which are connected in a torsion-proof manner with the first shaft (1), of which the first plate (8) has a higher thermal capacity than the second plate (11) and of which at least one plate (11) is axially displaceable in order to clamp a clutch disk (7), which is provided on either side with a wearing layer (8, 9), between the two plates (4, 11), **characterized in that** the wearing layer (9) on the side of the clutch disk (7) facing the second plate (11) is chosen to be thicker than the wearing layer (8) on the side facing the first plate (2), so that upon wear and tear the two wearing layers (8, 9) will reach a minimum thickness at approximately the same time, through which the service life of the clutch is extended.

2. A clutch according to claim 1, **characterized in that** the first plate (8) is axially immobile.

3. A clutch according to claim 1 or 2, **characterized in that** the wearing layer (8) on the side facing the second plate (11) is thicker by a factor of at least 1.2 than the side facing the first plate (2).

4. A clutch according to claim 1 or 2, **characterized in that** the wearing layer (8) on the side facing the second plate (11) is thicker by a factor of not more than 1.7 than the side facing the first plate (2).

5. An automated manual transmission for a motor vehicle, **characterized in that** a clutch according to one of the preceding claims is provided on an input side of the manual transmission.

## Revendications

1. Embrayage pour un véhicule à moteur avec un premier arbre (1) et un deuxième arbre (4), une première plaque (2) et une deuxième plaque (11) qui sont reliées au premier arbre (1) de façon solidaire en rotation, parmi lesquelles la première plaque (8) a une plus grande capacité thermique que la deuxième plaque (11) et parmi lesquelles au moins une plaque (11) est mobile dans le sens axial pour serrer entre les deux plaques (4, 11) un disque d'embrayage (7) relié au deuxième arbre (4) de façon solidaire en rotation, qui est muni d'une couche d'usure (8, 9) sur ses deux faces, **caractérisé en ce que** la couche d'usure (9) est plus épaisse sur la face du disque d'embrayage (7) orientée vers la deuxième plaque (11) que la couche d'usure (8) sur la face orientée vers la première plaque (2), de sorte qu'en cas d'usure, les deux couches d'usure (8, 9) atteignent à peu près simultanément une épaisseur minimale, ce qui augmente la durée de vie de l'embrayage.

2. Embrayage selon la revendication 1, **caractérisé en ce que** la première plaque (8) est immobile dans le sens axial.

3. Embrayage selon la revendication 1 ou 2, **caractérisé en ce que** la couche d'usure (8) sur la face orientée vers la deuxième plaque (11) est plus épaisse d'au moins un facteur 1,2 que sur la face orientée vers la première plaque (2).

4. Embrayage selon la revendication 1 ou 2, **caractérisé en ce que** la couche d'usure (8) sur la face orientée vers la deuxième plaque (11) est plus épaisse au maximum d'un facteur 1,7 que sur la face orientée vers la première plaque (2).

5. Boîte de vitesses automatique pour un véhicule à moteur, **caractérisée en ce qu'**un embrayage selon l'une des revendications précédentes est prévu sur le côté d'entrée de la boîte de vitesses.
